Europäisches Patentamt

(19) European Patent Office

Office européen des brevets

(11) Publication number: **0 142 848**

A2

(12) # EUROPEAN PATENT APPLICATION

(21) Application number: **84113976.9**

(22) Date of filing: **19.11.84**

(51) Int. Cl.⁴: **B 62 K 3/04**

(30) Priority: **18.11.83 IT 8363883**

(43) Date of publication of application:
**29.05.85 Bulletin 85/22**

(84) Designated Contracting States:
**AT BE CH DE FR GB IT LI LU NL SE**

(71) Applicant: **FAMI S.R.L.**
**Via Verdi 8**
**I-21040 Carnago (Varese)(IT)**

(72) Inventor: **Previtali, Giovanni**
**Via Verdi 8**
**I-21040 Carnago (Varese)(IT)**

(74) Representative: **Sassi, Romano**
**UFFICIO BREVETTI VARESINO Viale Belforte 89**
**I-21100 Varese(IT)**

(54) **Process for framing bicycles.**

(57) A bicycle of the kind having a frame unit comprised by a trapezoid and a triangle, conventionally formed with tubular members mounted together complying with dimensions and sizes wherein the alfa angle, with vertex at the saddle support head, is at least equal or higher than 40C; the ratio, R, between the distance A, included between the perpendicular to the bar, passing through the vertex comprised by the sprocket box head, and the perpendicular passing through the front opening of the rear fork eyelets, and the distance, B, between the intersection point of the aforesaid former perpendicular, with the vertex represented by saddle support head, is at least equal or higher than 2,4 and/or the product of such alfa angle, expressed in degrees, times said ratio R = A/B is equal or higher than 100, is framed providing: an alfa angle which is comprised from 34C and 40C, the ratio R = A/B is comprised from 1,8 and 2,4 and the digital product alfa times R is comprised from 70 and 100. While the distance, between the axle of the bar and the axle or hub of the front or steering wheel, taken at front fork eyelets, is higher, than the distance between the axle of the bar itself and the axle of the rear wheel, by at least 25 mm.

FIG. 3

EP 0 142 848 A2

0142848

## PROCESS FOR FRAMING BICYCLES

The present invention is directed to bicycles, and more particularly, to a framing process, particularly of frames and wheels and for making bicycle with a rear wheel axle advanced towards the front or steering wheel, substantially under the vertical of the saddle and to bicycles and frames, particularly for racing on 'vigorous' routes, obtained with such process.

It is well known that in racing bicycles, particularly in those adapted to be ridden on vigorous or lively routes, favourable effects are obtained whether the axle of the rear wheel is advanced closer to the front or steering wheel. The attempt which have been made up to this date resulted in poor reduction of the gap and at the price of constructive complications which resulted in a high cost and uncertain operation of the bicycle. One of these attempts consisted in advancing the rear fork and its wheel therewith whereby the rear wheel is run very very close to sprocket box head. Quite often this arrangement involves a digging or splitting of the frame trunk tube.

With ingenious perception the inventor has conceived a solution which not only does not not complicate bicycle manufacturing but on the contrary semplify it and provide a lighter, simpler, more aerodinamic, less cumbersome, more controllable bicycle. Of course, due to the high degree of perfection achieved with present bicycles, the marginal advantages obtained are rather small, as are the records that thanks to such improvements may be achieved with the bicycle according to the present invention. The arrangement whereby such improvements have been obtained, and the process resulting therefrom, comprises a bicycle frame such that a rear wheel of a smaller dimension than the dimension of conventional rear wheels or than the steering of the bicycle itself, is mountable thereon. The reductions resulting in said advantages may be enumerated as follow: a reduction of weigth by about 0.7 Kg.; a reduction of bicycle length by about 10 cm.; a reduction of the bicycle cost of about 5 per cent; a reduction of the air drag taking into account the less cumbrsome structures or members which are comprised in a different number, size and/or disposition, as well as the closer composition of the bicycle riders in a group e. g. in a team timed competition by about 0.3/1000. A further advantage, with a bicycle with wheels less spaced apart, is obtained in vigorous or lively routes, i.e., horizontally and/or vertically waved routes. In fact, a shorter bicycle according to the invention runs a strighter path which, in the long run, provides route shortenings by about 0.5/1000. These are the

CLAIMS                                    0142848

1 . A process for framing a bicycle of the kind having a frame comprised by tubular members arranged in the form of a trapezoid and a triangle, having a common side member comprised by the frame trunk tube, wherein the vertexs, adjacent to the frame trunk tube itself, are provided by tubular joints, the upper one of which, so said saddle support head, connect it to the bar, to the two tubes providing the rear fork and to the saddle support head, while the lower one, so said sprocket box head, connect it to the front down tube and to the two tubes, comprising the rear bottom fork, and connected, in turn, through the rear fork eyelets,to the bottom ends of the two tubes, comprising the rear upper fork, while the front ends of the bar and of the front down tube, are connected, through two heads, to the steering head whose size and disposition of members comply whith conventional rules wherein the alfa angle, with vertex at the saddle support head, is at least equal or higher than 40[, the ratio R, between the distance A, comprised between the perpendicular to the bar, passing through the vertex, comprised by sprocket box head, and the perpendicular passing through the front opening of the rear fork eyelets, and the distance B, between the intersection point of the aforesaid former perpendicular with the vertex comprised by saddle support head, is at least equal or higher than 2,4 and/or the product

0142848

of said alfa angle, expressed in degrees, times said ratio R = A/B is equal or higher than 100, characterized in that the alfa angle is comprised from 34[ and 40[, the ratio R = A/B is comprised from 1,8 and 2,4 and the digital product alfa angle X R is comprised from 70 to 100.

2 . A process for framing a bicycle, according to the foreward of claim 1, wherein the frame, including the front steering fork, has a distance D, between the axle of the bar and the axle of front or steering wheel, taken at front fork eyelets, which is substantially equal to the distance D′ between the axle of the bar itself and the axle of the rear wheel, taken at the rear fork eyelets, characterized in that such a distance D′ is well higher than the distance D by at least 25 mm.

3 . A bicycle having rear wheel axle advanced substantially under the vertical of the saddle, characterized in that at least its frame is obtained with the process according to claims 1 and 2.

4 . A bicycle, according to claim 3, characterized in that on its rear fork eyelets a wheel whose diameter is by at least two inches smaller than the diameter of front or steering wheel is provided or mountable.

- 4 -

0142848

paths run respectively by center of gravity of conventional bicycle and by center of gravity of a bicycle according to the present invention.

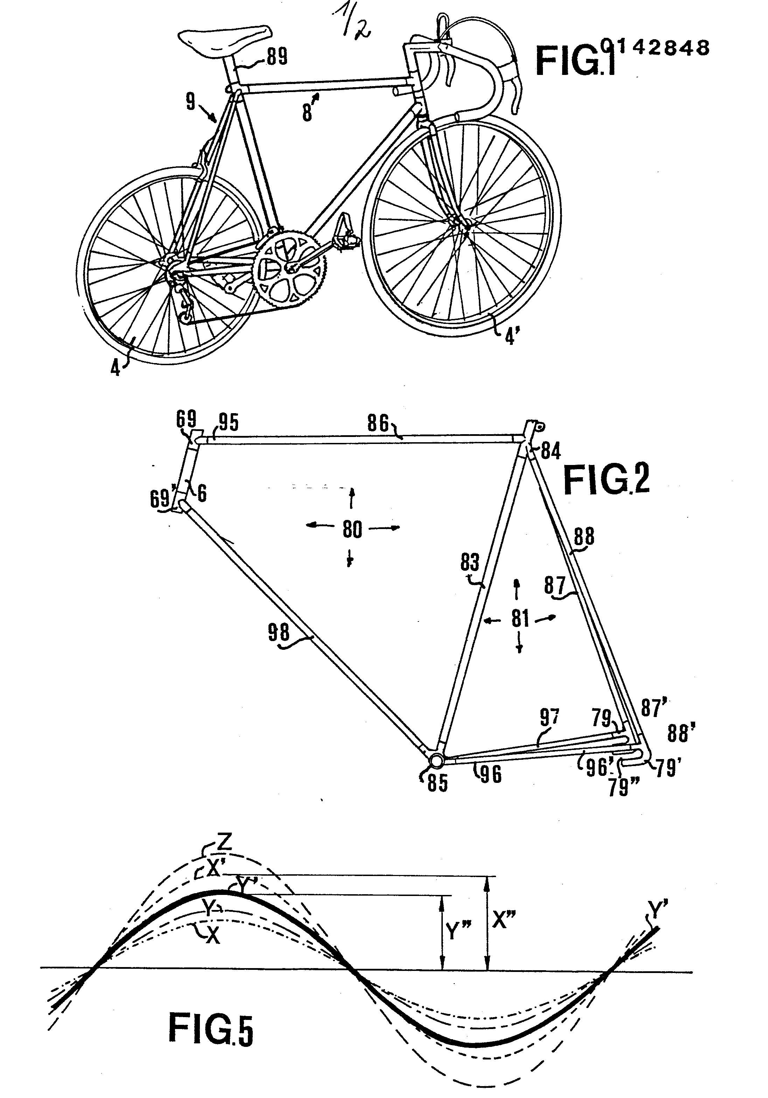

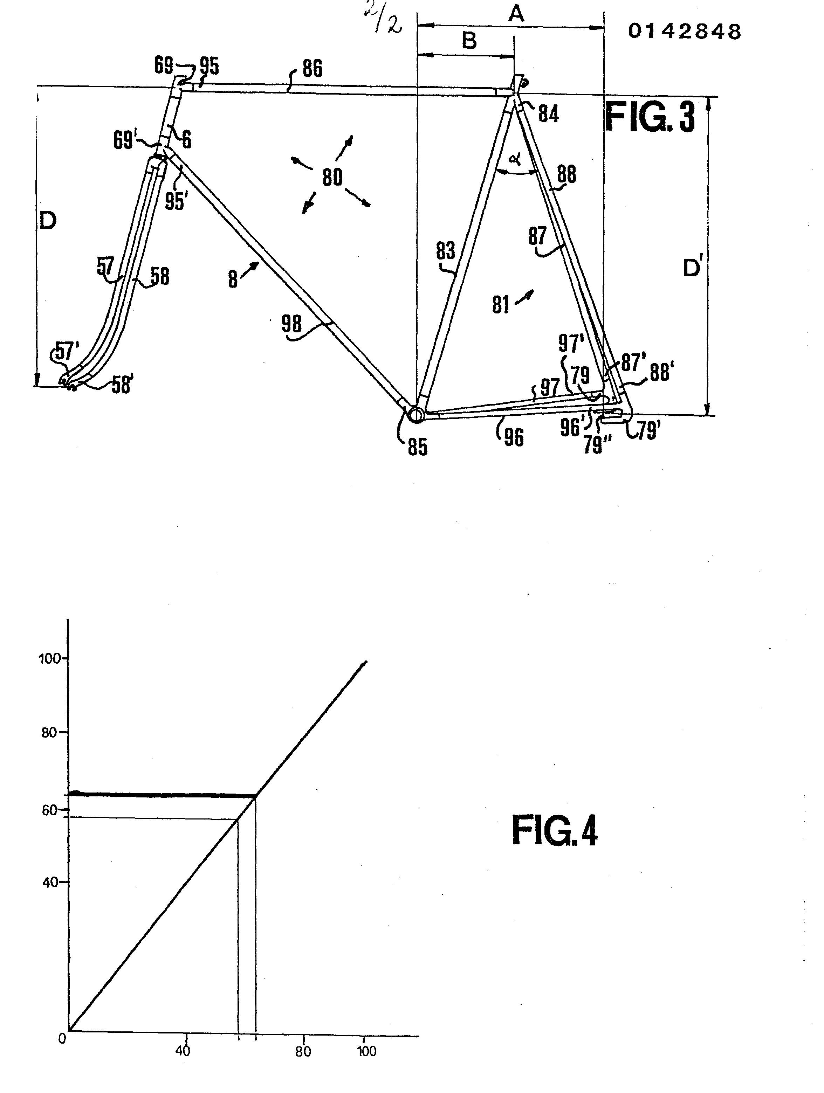

Referring now to the figures of the drawings, a bicycle 9, of the kind having a frame 8 shaped in the fashion of a trapezoid 80 combined with a triangle 81, having a common side 83, comprised by frame trunk tube, is shown. In such a bicycle frame the vertices 84 and 85, adjacent to the frame trunk tube 83 itself, are comprised by tubular joints 84 and 85 itself, the upper one 84, so said saddle carrier head, connects it to the bar 86, as well as to tubes 87 and 88, providing the upper rear fork and the saddle carrier tube 89, while the lower one, 85, so said sprocket box, connect it to the front down tube 98, as well as to the tubes 97 and 96, comprising the rear fork and, in turn, connected with their rear ends 96´ and 97´ through the rear fork eyelets 79 and 79´, to the bottom ends 87´ and 88´ of the two tubes 87 and 88, providing the upper rear fork, while the front ends 95 and 95´, of bar 86 and of front down tube 98 are connected, through two heads 69 and 69´, to the steering head 6. This frame complies conventionally to such dimensions and angles of its tubular members whereby the alfa angle, provided by tubes 87 and 88 from one side and 83, from the other side, with vertex at saddle support head 84, is at least equal or higher than 40[ ; the ratio, R,

between the distance, A, comprised between the perpendicular to the bar 86, passing through the vertex 85, comprised by the sprocket box head, and the perpendicular passing through the front opening 79" of the rear fork eyelets 79 and 79', and the distance B, between the point, E, of intersection of the aforesaid former perpendicular, with the vertex 84, comprised by the saddle support head 84 itself, is at least equal or higher than 2,4 and/or the product of said alfa angle, expressed in degrees, times said ratio: R = A/B, is equal or higher than 100. Referring now, particularly to Figure 3, conventionally, the fork, provided by bowed tubes 57 and 58, is provided with front fork eyelets 57' and 58' at a distance D from the axle of bar 86, substantially corresponding to the distance D' comprised between the axle of fork eyelets 79 and 79' and said bar 86. Thus the frame of conventional bicycle was described.

According to the present invention, the distance from the axle of the rear wheel i.e. of fork eyelets 79 and 79', from the vertex comprised by the sprocket axle box, 85 is minimized by mounting a rear wheel 4 of a smaller diameter than the diameter of front wheel 4' whereby to involve the provision of a frame characterized in that, the alfa angle therein is comprised from 34[ and 40[, the ratio R = A/B is comprised from 1,8 and 2,4 and the digital product alfa x R is comprised from 70

FIG.1

0142848

FIG.2

FIG.5

0142848

FIG.3

FIG.4